# EUROPÄISCHE PATENTSCHRIFT

(11) **EP 1 517 770 B1**
(45) Veröffentlichungstag und Bekanntmachung des Hinweises auf die Patenterteilung: **20.09.2006**
(21) Anmeldenummer: 03761400.5
(22) Anmeldetag: 17.05.2003
(51) Int. Cl.: B26D 3/16, B26D 1/60, B29C 53/82

(54) **VERFAHREN UND VORRICHTUNG ZUM TRENNEN VON SCHL UCHEN**
METHOD AND DEVICE FOR THE SEPARATION OF TUBES
PROCEDE ET DISPOSITIF DE SEPARATION DE TUBES

(30) Priorität: 28.06.2002 DE 10229081
(43) Veröffentlichungstag der Anmeldung: 30.03.2005
(73) Patentinhaber: ContiTech Luftfedersysteme GmbH, 30165 Hannover (DE)
(72) Erfinder: OEHL, Rainer, 30938 Grossburgwedel (DE); BINDER, Klaus, 31157 Sarstedt (DE); BERGER, Markus, 31319 Sehnde (DE)
(74) Vertreter: Gerstein, Hans Joachim
(86) Internationale Anmeldenummer: PCT/DE2003/001594
(87) Internationale Veröffentlichungsnummer: WO 2004/002693

(56) Entgegenhaltungen:
- EP-A- 1 122 052
- DE-A- 2 545 058
- DE-A- 3 840 788
- US-A- 3 128 216
- US-A- 4 125 423

## Beschreibung

Die Erfindung betrifft ein Verfahren bzw. eine Vorrichtung zum Trennen von Schläuchen nach dem Oberbegriff des Anspruchs 1 bzw. 10, die kontinuierlich auf einer Reihe fortlaufend aneinander gekoppelter, zylindrischer Dorne hergestellt werden, indem die Dorne in eine Förderrichtung vorgetrieben und Kautschuk- und Festigkeitsträgerschichten auf die Dorne aufgebracht werden, wobei an den Verbindungsstellen aufeinanderfolgender Dorne ein Materialunterschied zum Dornmaterial ist.

Ein solches Verfahren bzw. eine solche Vorrichtung ist aus DE 25 45 058 C bekannt.

Derartige Schläuche werden beispielsweise für Luftfederbälge in Fahrzeugen verwendet. Ein solcher Schlauch ist hierbei aus übereinander geschichteten rohrförmigen Kautschuk- und Festigkeitsträgerschichten gebildet.

Aus der DE 27 50 642 C2 ist ein automatisiertes Verfahren zur Herstellung von mehrlagigen Rohren bekannt, bei dem Kautschuk- und Festigkeitsträgerschichten auf einen ortsfest gelagerten rotierenden Dorn aufgewickelt werden. Eine Materialzufuhreinheit wird hierbei in Längsrichtung entlang des Dorns bewegt. Nachteilig ist, dass dieses Herstellungsverfahren nicht kontinuierlich arbeitet, sondern auf die Länge des Dorns begrenzt ist. Zudem kann die Dicke und der Winkel der aufgewickelten Kautschuk- und Festigkeitsträgerschichten nicht mit ausreichender Genauigkeit aufgebracht werden.

In der DE 44 23 602 A1 ist ein ähnliches Wickelverfahren offenbart, bei dem der Schlauch erst nach seiner Vulkanisation geschnitten wird, um einen Lufteinschluß zwischen den Kautschuk- und Festigkeitsträgerschichten zu reduzieren. Zudem werden die Gewebeenden nach dem Aufschneiden verschmolzen, so dass ein nachteiliges Lufteindringen zwischen die Kautschuk- und Festigkeitsträgerschichten verhindert wird.

In der DE 1 180 513 ist ein Wickelverfahren zur kontinuierlichen Herstellung von Schläuchen beschrieben, bei dem Kautschuk- und Festigkeitsträgerschichten auf endlos hintereinander gereihte und in eine Förderrichtung vorgetriebene Reihe von Dornen aufgewickelt werden. Der Schlauch wird auf den Dornen vulkanisiert. Anschließend werden die Dornteilstücke abgezogen und an das Ende des in die Wickelmaschine einlaufenden Dornteilstücks lösbar angehängt. Die für Luftfederbälge erforderliche Präzision kann nachteilig bei dem Wickelverfahren nicht gewährleistet werden. Zudem werden die Dorne bei dem Vulkanisieren thermisch belastet und es besteht die Gefahr, dass die Dorne sich verformen, so dass eine gleichbleibende Qualität der Schläuche nicht mehr gewährleistet werden kann.

In der DE 25 45 058 C3 ist eine Vorrichtung zum Herstellen von gekrümmten Kautschukschläuchen beschrieben, bei der mit mindestens einem Extruder und einer Fadenarmierungsmaschine Kautschuk- und Festigkeitsträgerschichten auf kontinuierlich in Förderrichtung vorgetriebene Dorne aufgebracht werden. Die Dorne stoßen hierbei unmittelbar nahtlos aneinander. In einer Schneideinrichtung werden zwei Dorne jeweils gegeneinander so verschoben, dass zwischen ihren Stirnseiten ein Spalt entsteht, in den ein Trennmesser der Schneideinrichtung eingreifen kann. Hierbei wird nachteilig das Fadengelege in dem Schlauch gestreckt und in seiner Lage verändert.

Die Dorne sind flexibel und werden zusammen mit dem auf einem Dorn befindlichen Schlauchstück in eine gekrümmte Lage gebracht und in einer Vulkanisationsanlage vulkanisiert. Der vulkanisierte Schlauch wird anschließend von dem Dorn getrennt.

Aufgabe der Erfindung war es daher, ein verbessertes automatisiertes Verfahren und eine Vorrichtung zum Trennen von Schläuchen zu schaffen, die eine für Luftfedern ausreichende Präzision der Schläuche und eine hohe Prozesssicherheit gewährleisten.

Die Aufgabe wird mit der gattungsgemäßen Vorrichtung gelöst durch die Merkmale des Anspruchs 1. Die Vorrichtung enthält die folgenden Merkmale:
- eine Messeinrichtung zum Detektieren der Verbindungsstellen aufeinanderfolgender Dorne,
- eine in Förderrichtung der Messeinrichtung nachgeordnete Trennvorrichtung zum Abtrennen der Schläuche, wobei die Trennvorrichtung von der Messeinrichtung gesteuert ist, um die Trennvorrichtung auf die Verbindungsstelle auszurichten, und
- wobei die Trennvorrichtung einen um die Verbindungsstelle rotierbaren Schneidkopf hat und die Trennvorrichtung während des Trennvorgangs in Förderrichtung synchron mit den Dornen vorschiebbar ist.

Durch das automatische Detektieren der Verbindungsstellen und Schneiden der Schläuche an den Verbindungsstellen während des Dornvortriebs ist ein Abtrennen der Schläuche im laufenden Betrieb möglich. Dabei ist es nicht erforderlich, einen Spalt durch Auseinanderziehen der Dorne vor dem Schneiden künstlich zu erzeugen, und es wird ein Verschieben der Fadenlagen durch den Schneidvorgang vermieden.

Erst nach dem Trennen der Schläuche erfolgt ein Lösen der Verbindung der Dorne an der Verbindungsstelle mit Hilfe einer Einrichtung, die mit der Trenneinrichtung gekoppelt ist.

Anschließend werden die gelösten Dorne vorzugsweise in einer Fördereinrichtung vorgetrieben und vereinzelt, die der Trennvorrichtung in Förderrichtung gesehen nachgeordnet ist. Hierzu ist die Geschwindigkeit der Fördereinrichtung höher eingestellt, als die Dornvorschubgeschwindigkeit. Damit können die vereinzelten Dorne anschließend mit Handhabungsmitteln entnommen und die abgetrennten Schläuche von den Dornen abgenommen werden, ohne dass der kontinuierliche Fertigungsprozess beeinflusst wird.

Vorzugsweise sind umlaufende Nuten an den Verbindungsstellen der Dorne vorgesehen, die von der Messeinrichtung detektiert werden. Dann ist es möglich, dass ein Schneidmesser beim Trennvorgang in diese Nuten eintaucht, so dass die Dorne und die Verbindungsstellen der Dorne sowie das Messer nicht beschädigt werden. Alternativ kann die Nut aber auch mit einem Bauteil verschlossen sein, in das das Messer eintaucht und das als Verschleißteil dient.

Die Messeinrichtung hat vorzugsweise einen induktiven Sensor. Damit kann die Verbindungsstelle anhand von Materialunterschieden leicht und zuverlässig detektiert werden.

Alternativ hierzu kann die Messeinrichtung auch als mechanischer Mitnehmer ausgebildet sein, der mit den Dornen mitfährt und mechanisch mit der Trennvorrichtung gekoppelt ist.

Die Messeinrichtung kann auch ein Messrad haben, das mit den Dornen gekoppelt ist und den Vorschub der Dorne ermittelt, In festgelegten Abständen entsprechend der Dornlänge erfolgt dann jeweils ein Schnitt.

Entsprechend der Erfindung hat das gattungsgemäße Verfahren erfindungsgemäß die Schritte des Anspruchs 10. Das Verfahren enthält die folgenden Schritte :
- Detektion der Verbindungsstellen aufeinanderfolgender Dorne,
- Positionieren eines Schneidkopfes einer Trennvorrichtung zum Ablängen des Schlauches derart, dass der Schneidkopf auf die detektierte Verbindungsstelle ausgerichtet ist,
- Vortreiben der Trennvorrichtung in Förderrichtung synchron mit der Vortriebsgeschwindigkeit der Dorne,
- Rotieren des Schneidkopfes um den Umfang der Dorn-Verbindungsstelle zum umlaufenden Schneiden des Schlauches, während die Trennvorrichtung vorgetrieben wird,
- Rückfahren der Trennvorrichtung an eine Ausgangsposition nach Beendigung des Schneidvorgangs.

Die Erfindung wird nachfolgend anhand der beigefügten Zeichnungen näher erläutert. Es zeigen:
- **Figuren 1a bis h** -: eine Sequenz des erfindungsgemäßen Verfahrens zum Trennen von Schläuchen als schematisches Blockdiagramm;
- **Figuren 2a bis d** -: eine Sequenz des erfindungsgemäßen Verfahrens mit einem mechanischen Mitnehmer zum Positionieren der Trennvorrichtung;
- **Figuren 3a bis d** -: eine Sequenz des erfindungsgemäßen Verfahrens mit einer Vorschubmesseinheit zur Weg-/Längenmessung und Positionierung der Trennvorrichtung.

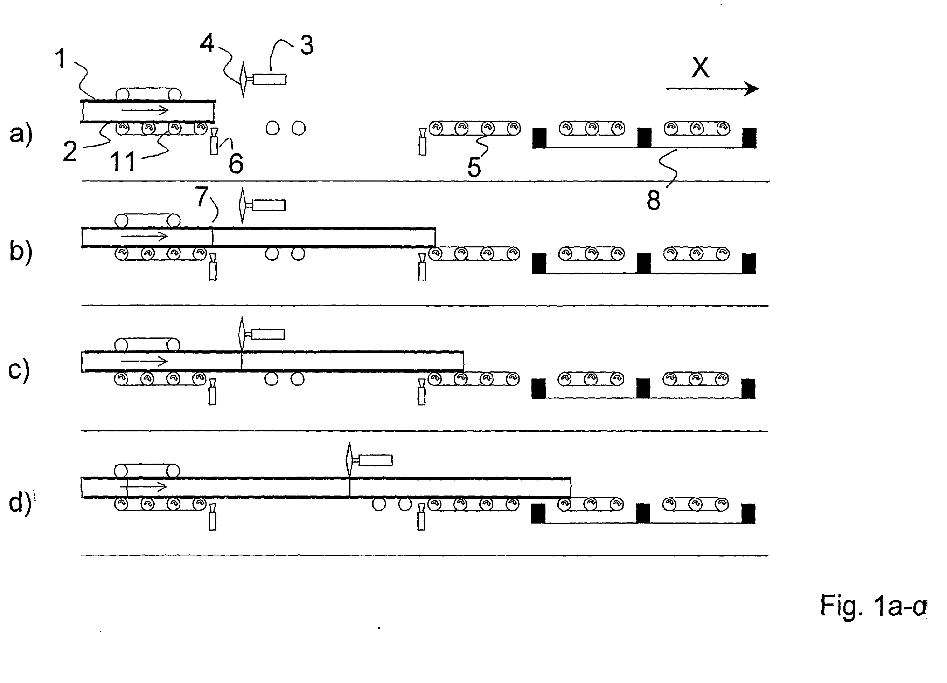

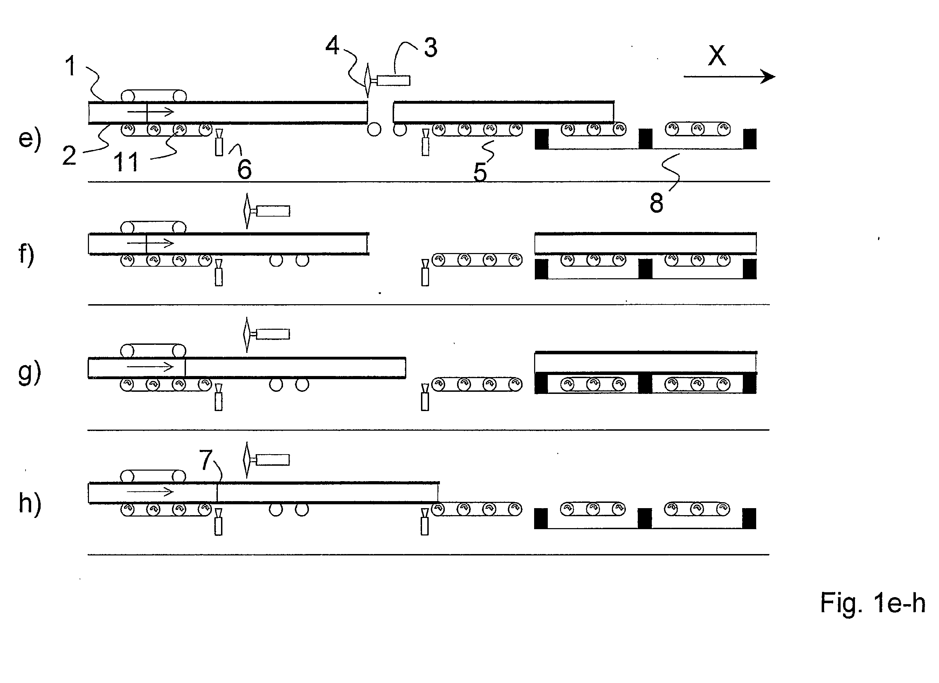

Die Figur 1 lässt eine Vorrichtung zum Trennen von Schläuchen 1 erkennen, die kontinuierlich auf eine Reihe fortlaufend aneinander gekoppelter zylindrischer Dorne 2 durch Aufextrudieren von Kautschukschichten und Aufspiralisieren von Fadenlagen hergestellt werden. Die Dorne 2 werden hierzu in eine Förderrichtung X beispielsweise mit einer Fördereinrichtung 11 vorgetrieben.

Die Vorrichtung hat eine Trennvorrichtung 3 mit einem feststehenden oder beweglichen Schneidkopf 4. Der Schneidkopf 4 der Trennvorrichtung 3 ist rotierbar um den Schlauch 1 ausgebildet, so dass das Abtrennen der Schläuche 1 mit einem umlaufenden Schnitt erfolgt. Die Trennvorrichtung 3 ist in Förderrichtung X mit Vorschubmitteln verfahrbar, um während des Vortriebs der Dorne 2 einen umlaufenden Schnitt durchführen zu können.

In Förderrichtung X der Trennvorrichtung 3 nachgeordnet ist eine weitere Fördereinrichtung 5 vorgesehen, um die gelösten Dorne 2 mit den abgetrennten Schläuchen 1 vorzutreiben und zu vereinzeln.

Erfindungsgemäß ist eine berührungslose Messeinrichtung 6 in Förderrichtung X gesehen vor der Trenneinrichtung 3 angeordnet, um die Verbindungsstellen 7 aufeinanderfolgender Dorne 2 zu detektieren.

Die Figur 1a) lässt einen ersten Zeitpunkt der Sequenz des Verfahrens zum Trennen von Schläuchen 1 erkennen, bei dem ein Dorn 2 anfänglich über die Messeinrichtung 6 läuft. Die Messeinrichtung 6 detektiert hierbei lediglich das konstante Dornmaterial, nicht jedoch einen Wechsel von Dornmaterialien, wie er für die Verbindungsstellen 7 aufeinanderfolgender Dorne 2 charakteristisch ist.

Zu einem zweiten Zeitpunkt b) ist der Dorn 2 weiter vorgetrieben und die Verbindungsstelle 7 zweier aufeinanderfolgender Dorne 2 befindet sich nunmehr im Bereich der Messeinrichtung 6. Diese detektiert nunmehr beispielsweise durch induktives Messen den charakteristischen Materialwechsel an der Verbindungsstelle 7 und gibt ein Startsignal an die Trennvorrichtung 3 weiter. Da der Abstand zwischen der Messeinrichtung 6 und der Trennvorrichtung 3 sowie die Dorngeschwindigkeit bekannt sind, setzt die Trennvorrichtung 3 zum Zeitpunkt c) den Schneidkopf 4 unmittelbar an der Verbindungsstelle 7 der aufeinanderfolgenden Dorne 2 an und führt einen umlaufenden kontinuierlichen Schnitt durch. Hierzu fährt die Trennvorrichtung 3 mit Hilfe der Vorschubmittel synchron mit Dorngeschwindigkeit mit den vorgetriebenen Dornen 2 mit, wie in der Sequenz zum Zeitpunkt d) erkennbar ist.

Optional kann ein weiterer Sensor 6' in Förderrichtung X gesehen hinter der Trennvorrichtung 3 angeordnet sein, um den Sensor 6 scharf zu schalten.

Im Zeitpunkt e) der Sequenz ist der umlaufende Schnitt um den Schlauch 1 beendet und der Dorn 2 mit dem abgelängten Schlauch 1 wird von der nachfolgenden Reihe fortlaufender Dorne 2 durch Lösen einer Kupplung gelöst. Der gelöste Dorn 2 wird mit Hilfe der Fördereinrichtung 5 in höherer Geschwindigkeit, als die Vortriebsgeschwindigkeit der Dorne 2 vorgetrieben und auf diese Weise vereinzelt. Dabei wird der Dorn 2 bis zu einer Handhabungseinrichtung 8 befördert, um den Dorn 2 aus dem kontinuierlichen Prozess heraus zu schaffen und ohne Beeinträchtigung des kontinuierlichen Herstellungsprozesses den abgelängten Schlauch 1 von dem vereinzelten Dorn 2 abzuziehen.

Wie aus den Verfahrenssequenzen zum Zeitpunkt f) und g) erkennbar ist, fährt die Trennvorrichtung 3 nach Beendigung des umlaufenden Schnitts wieder entgegengesetzt zur Förderrichtung X nach vorne und steht für einen weiteren Schnitt bereit.

Der Zeitpunkt h) entspricht dem Zeitpunkt b) im vorhergehenden Verfahrensstadium und das Verfahren zum Trennen von Schläuchen 1 wird mit dieser Sequenz kontinuierlich wiederholt.

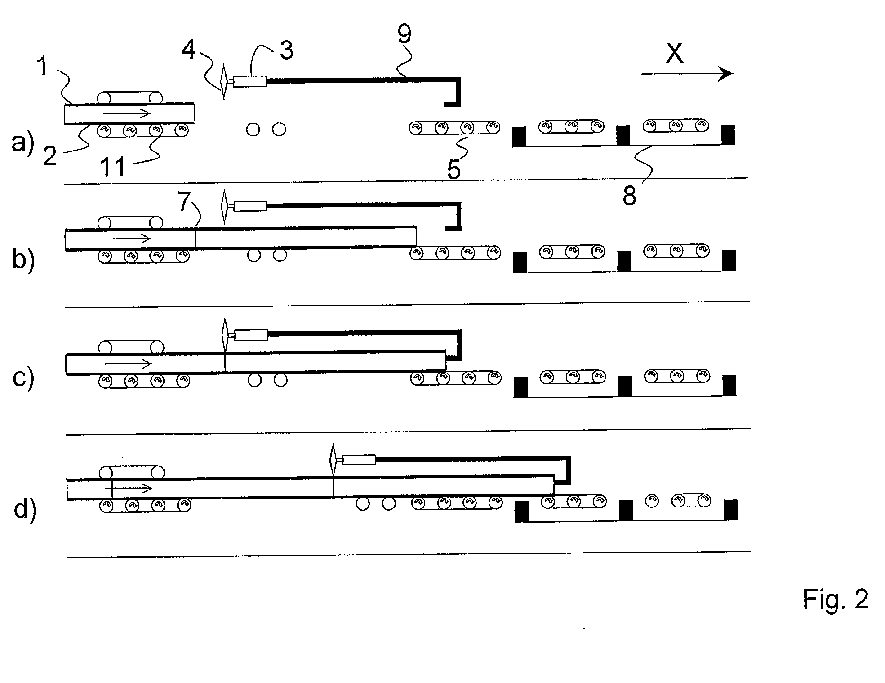

Die Figur 2 lässt eine alternative Ausführungsform der Vorrichtung zum Trennen von Schläuchen 1 erkennen, bei der die Trennvorrichtung 3 mit einem Mitnehmer 9 mechanisch verbunden ist. Der Mitnehmer 9 erstreckt sich derart, dass, wie in der Sequenz c) erkennbar ist, beim Auftreffen eines Dornendes an den Mitnehmer 9 die Trennvorrichtung 3 in Förderrichtung X zusammen mit den Dornen 2 verfahren wird. Dabei erfolgt dann der umlaufende Schnitt zum Trennen der Schläuche 1.

Der Mitnehmer 9 ist so ausgerichtet, dass der Schneidkopf 4 der Trennvorrichtung 3 präzise an dem Schnittbereich der Verbindungsstellen 7 aufeinander folgender Dorne 2 angesetzt wird.

Nach Beendigung des umlaufenden Schnitts wird der Mitnehmer 9 mit der Trennvorrichtung 3 von den Dornen 2 abgekoppelt und wieder in die Ausgangsposition zurückgefahren.

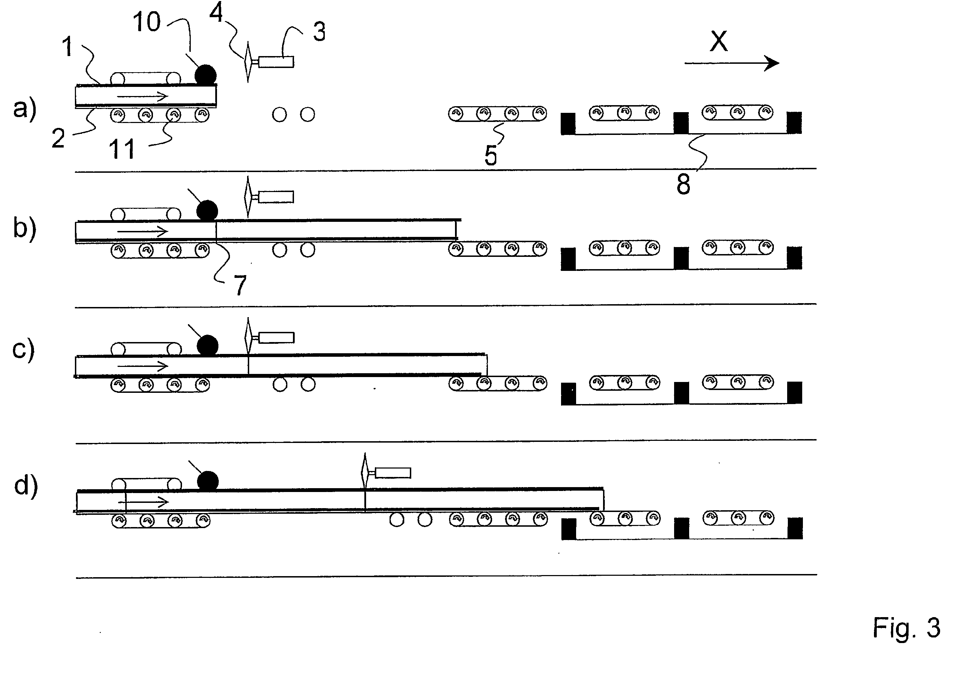

Die Figur 3 lässt eine andere Ausführungsform der Vorrichtung zum Trennen von Schläuchen 1 erkennen, wobei eine Vorschubmesseinrichtung 10, beispielsweise ein Messrad, zur Detektion der Verbindungsstellen 7 zweier aufeinander folgender Dorne 2 und Steuerung der Trennvorrichtung 3 vorgesehen ist. Mit der Vorschubmesseinrichtung 10 wird der Vorschub der Schläuche 1 in Förderrichtung X kontinuierlich gemessen und aus der bekannten Länge der einzelnen Dorne 2 die Position der Schnittbereiche an den Verbindungsstellen 7 aufeinander folgender Dorne 2 errechnet.

Wie aus der Sequenz c) erkennbar ist, wird der Schneidkopf 4 der Trennvorrichtung 3 präzise auf den Schnittbereich an einer Verbindungsstelle 7 aufgesetzt und der Schlauch 1 beispielsweise mit einem umlaufenden Schnitt abgetrennt. Während des Trennvorganges verfährt die Trennvorrichtung 3 synchron mit den Dornen 2 und den darauf aufgebrachten Schläuchen 1.

## Patentansprüche

1. Vorrichtung zum Trennen von Schläuchen (1), die kontinuierlich auf einer Reihe fortlaufend aneinander gekoppelter, zylindrischer Dorne (2) hergestellt werden, indem die Dorne (2) in eine Förderrichtung (X) vorgetrieben und Kautschuk- und Festigkeitsträgerschichten auf die Dorne (2) aufgebracht werden, wobei an den Verbindungsstellen (7) aufeinanderfolgender Dorne (2) ein Materialunterschied zum Dornmaterial ist,
**gekennzeichnet durch**
- eine Messeinrichtung (6, 9, 10) zum Detektieren der Verbindungsstellen (7) aufeinanderfolgender Dorne (2),
- eine in Förderrichtung der Messeinrichtung (6, 9, 10) nachgeordnete Trennvorrichtung (3) zum Trennen der Schläuche (1), wobei die Trennvorrichtung (3) von der Messeinrichtung (6, 9, 10) gesteuert ist, um die Trennvorrichtung (3) auf die Verbindungsstelle (7) auszurichten, und
- wobei die Trennvorrichtung (3) einen um die Verbindungsstelle (7) rotierbaren Schneidkopf (4) hat und die Trennvorrichtung (3) während des Trennvorgangs in Förderrichtung (X) synchron mit den Dornen (2) vorschiebbar ist.

2. Vorrichtung nach Anspruch 1, **gekennzeichnet durch** eine mit der Trennvorrichtung (3) gekoppelte Einrichtung zum Lösen der Verbindung der Dorne an der Verbindungsstelle nach dem Trennen der Schläuche (1).

3. Vorrichtung nach Anspruch 2, **gekennzeichnet durch** eine in Förderrichtung der Trennvorrichtung (3) nachgeordnete Fördereinrichtung (5) zum Vortreiben und Vereinzeln der gelösten Dorne (2).

4. Vorrichtung nach einem der vorhergehenden Ansprüche, **dadurch gekennzeichnet, dass** die Messeinrichtung (6) zur Detektion von Materialunterschieden zwischen den Dornen (2) an den Verbindungsstellen (7) aufeinanderfolgender Dorne (2) ausgebildet ist.

5. Vorrichtung nach Anspruch 4, **dadurch gekennzeichnet, dass** die Messeinrichtung (6) einen induktiven Sensor hat.

6. Vorrichtung nach Anspruch 4, **dadurch gekennzeichnet, dass** die Messeinrichtung (9) als Mitnehmer ausgebildet ist, die mechanisch mit der Trennvorrichtung gekoppelt ist.

7. Vorrichtung nach einem der Ansprüche 1 bis 3, **dadurch gekennzeichnet, dass** die Messeinrichtung (9) ein mit den Dornen (2) gekoppeltes Messrad (10) zur Erfassung des Vorschubs der Dorne (2) hat.

8. Vorrichtung nach einem der vorhergehenden Ansprüche, **dadurch gekennzeichnet, dass** der Schneidkopf (4) eine feststehende oder bewegbare Schneide hat.

9. Vorrichtung nach Anspruch 8, **dadurch gekennzeichnet, dass** der Schneidkopf (4) zum Ultraschallschneiden, Laserschneiden oder Wasserstrahlschneiden ausgebildet ist.

10. Verfahren zum Trennen von Schläuchen (1), die kontinuierlich auf einer Reihe fortlaufend aneinander gekoppelter, zylindrischer Dorne (2) hergestellt werden, indem die Dorne (2) in eine Förderrichtung (X) vorgetrieben und Kautschuk- und Festigkeitsträgerschichten auf die Dorne (2) aufgebracht werden, wobei an den Verbindungsstellen (7) aufeinanderfolgender Dorne (2) ein Materialunterschied zum Dornmaterial ist,
**gekennzeichnet durch**
- Detektion der Verbindungsstellen (7) aufeinanderfolgender Dorne (2),
- Positionieren eines Schneidkopfes (4) einer Trennvorrichtung (3) zum Ablängen des Schlauches (1) derart, dass der Schneidkopf (4) auf die detektierte Verbindungsstelle (7) ausgerichtet ist,
- Vortreiben der Trennvorrichtung (3) in Förderrichtung (X) synchron mit der Vortriebsgeschwindigkeit der Dorne (2),
- Rotieren des Schneidkopfes (4) um den Umfang der Dornverbindungsstelle (7) zum umlaufenden Schneiden des Schlauches (1), während die Trennvorrichtung (3) vorgetrieben wird,
- Rückfahren der Trennvorrichtung (3) an eine Ausgangsposition nach Beendigung des Schneidvorgangs.

11. Verfahren nach Anspruch 10, **gekennzeichnet durch** Lösen der Verbindung des Dorns, der den abgetrennten Schlauch (1) trägt, mit dem in Förderrichtung (X) nachfolgenden Dorn (2) und Vortreiben des gelösten Dorns (2) mit höherer Vortriebsgeschwindigkeit als die Dornvortriebsgeschwindigkeit zum Vereinzeln des gelösten Dorns (2).

12. Verfahren nach Anspruch 10 oder 11, **gekennzeichnet durch** induktives Messen von Materialunterschieden an den Verbindungsstellen (7) aufeinanderfolgender Dorne zur Detektion der Verbindungsstellen (7).

13. Verfahren nach Anspruch 12, **dadurch gekennzeichnet, dass** das Messen der Materialunterschiede induktiv oder mechanisch mit einem Mitnehmer erfolgt.

14. Verfahren nach einem der Ansprüche 10 oder 11, **dadurch gekennzeichnet, dass** die Detektion der Verbindungsstellen (7) mit einem Messrad (10) erfolgt, das mit den Dornen (2) gekoppelt ist.

15. Verfahren nach einem der Ansprüche 10 bis 14, **dadurch gekennzeichnet, dass** das Abtrennen der Schläuche (1) mit einer feststehenden oder einer bewegten Schneide erfolgt.

16. Verfahren nach einem der Ansprüche 10 bis 15, **dadurch gekennzeichnet, dass** das Abtrennen der Schläuche (1) mit Ultraschallschneiden, Laderschneiden oder Wasserstrahlschneiden erfolgt.

17. Verfahren nach einem der Ansprüche 10 bis 15, **dadurch gekennzeichnet, dass** das Schneidmesser (4) in einen umlaufenden Schnittbereich an der Verbindungsstelle (7) aufeinanderfolgender Dorne eintaucht.

## Claims

1. An apparatus for the separation of tubes (1) which are produced continuously on a row of cylindrical mandrels (2), continuously coupled to one another, by the mandrels (2) being advanced in a conveying direction (X) and by rubber and reinforcement layers being applied to the mandrels (2), there being a material difference from the mandrel material at the connection points (7) of successive mandrels (2),
**characterized by**
- a measuring device (6, 9, 10) for detecting the connection points (7) of successive mandrels (2),
- a separating device (3), arranged downstream of the measuring device (6, 9, 10) in the conveying direction, for the separation of the tubes (1), the separating device (3) being controlled by the measuring device (6, 9, 10) in order to align the separating device (3) with the connection point (7), and
- the separating device (3) having a cutting head (4) rotatable about the connection point (7), and the separating device (3) being capable of being advanced in conveying direction (X) synchronously with the mandrels (2) during the separating operation.

2. The apparatus as claimed in claim 1, **characterized by** a device which is coupled to the separating device (3) and is intended for releasing the connection between the mandrels at the connection point after the separation of the tubes (1).

3. The apparatus as claimed in claim 2, **characterized by** a conveying device (5) which is arranged downstream of the separating device (3) in the conveying direction and is intended for advancing and singularizing the released mandrels (2).

4. The apparatus as claimed in one of the preceding claims, **characterized in that** the measuring device (6) is designed for detecting material differences between the mandrels (2) at the connection points (7) of successive mandrels (2).

5. The apparatus as claimed in claim 4, **characterized in that** the measuring device (6) has an inductive sensor.

6. The apparatus as claimed in claim 4, **characterized in that** the measuring device (9) is designed as a driver which is mechanically coupled to the separating device.

7. The apparatus as claimed in one of claims 1 to 3, **characterized in that** the measuring device (9) has a measuring wheel (10), coupled to the mandrels (2), for detecting the feed of the mandrels (2).

8. The apparatus as claimed in one of the preceding claims, **characterized in that** the cutting head (4) has a fixed or movable cutting edge.

9. The apparatus as claimed in claim 8, **characterized in that** the cutting head (4) is designed for ultrasound cutting, laser cutting or water-jet cutting.

10. A method of separating tubes (1) which are produced continuously on a row of cylindrical mandrels (2), continuously coupled to one another, by the mandrels (2) being advanced in a conveying direction (X) and by rubber and reinforcement layers being applied to the mandrels (2), there being a material difference from the mandrel material at the connection points (7) of successive mandrels (2),
**characterized by**
- detection of the connection points (7) of successive mandrels (2),
- positioning of a cutting head (4) of a separating device (3) for cutting the tube (1) to length in such a way that the cutting head (4) is aligned with the detected connection point (7),
- advance of the separating device (3) in conveying direction (X) synchronously with the advancing speed of the mandrels (2),
- rotation of the cutting head (4) about the circumference of the mandrel connection point (7) for the circumferential cutting of the tube (1) while the separating device (3) is advanced,
- withdrawal of the separating device (3) to an initial position after completion of the cutting operation.

11. The method as claimed in claim 10, **characterized by** release of the connection between the mandrel which carries the cut-off tube (1) and the following mandrel (2) in conveying direction (X), and advance of the released mandrel (2) at a higher advancing speed than the mandrel advancing speed for singularizing the released mandrel (2).

12. The method as claimed in claim 10 or 11, **characterized by** inductive measurement of material differences at the connection points (7) of successive mandrels for detecting the connection points (7).

13. The method as claimed in claim 12, **characterized in that** the measurement of the material differences is effected inductively or mechanically with a driver.

14. The method as claimed in either of claims 10 or 11, characterixed in that the detection of the connection points (7) is effected with a measuring wheel (10) which is coupled to the mandrels (2).

15. The method as claimed in one of claims 10 to 14, **characterized in that** the tubes (1) are cut off with a fixed or a moved cutting edge.

16. The method as claimed in one of claims 10 to 15, **characterized in that** the tubes (1) are cut off by ultrasound cutting, laser cutting or water-jet cutting.

17. The method as claimed in one of claims 10 to 15, **characterized in that** the cutting blade (4) plunges into a circumferential cutting region at the connection point (7) of successive mandrels.

## Revendications

1. Dispositif pour séparer des tubes flexibles (1) qui sont fabriqués en continu sur un alignement continu de mandrins (2) cylindriques accouplés les uns aux autres, dans lequel les mandrins (2) sont entraînés en avant dans une direction de transport (X) et des couches de caoutchouc et de support de renforcement sont appliquées sur les mandrins (2), une différence de matière par rapport à la matière des mandrins (2) existant dans les zones de liaison (7) des mandrins (2) successifs, **caractérisé par** :
- un dispositif de mesure (6, 9, 10) pour détecter les zones de liaison (7) des mandrins (2) successifs,
- un dispositif de séparation (3) pour séparer les tubes flexibles (1) disposé après le dispositif de mesure (6, 9, 10) dans la direction de transport de celui-ci, le dispositif de séparation (3) étant commandé par le dispositif de mesure (6, 9, 10) pour diriger le dispositif (6, 9, 10) vers la zone de liaison (7), et
- dans lequel le dispositif de séparation (3) comporte une tête de coupe 4) pouvant tourner autour de la zone de liaison et le dispositif de séparation (3) peut se déplacer dans la direction de transport (X) de façon synchrone avec les mandrins (2) pendant l'opération de séparation.

2. Dispositif selon la revendication 1, **caractérisé par** un dispositif accouplé avec le dispositif de séparation (3) pour libérer le mandrin dans la zone de liaison après la séparation du tube flexible (1).

3. Dispositif selon la revendication 2, **caractérisé par** un dispositif de transport (5) disposé après le dispositif de séparation (3) dans la direction de transport pour entraîner vers l'avant et individualiser le mandrin (2) libéré.

4. Dispositif selon l'une des revendications précédentes, **caractérisé en ce que** le dispositif de mesure (6) est réalisé pour détecter des différences de matière entre les mandrins (2) dans les zones de liaison (7) des mandrins successifs (2).

5. Dispositif selon la revendication 4, **caractérisé en ce que** le dispositif de mesure (6) comporte un capteur inductif.

6. Dispositif selon la revendication 4, **caractérisé en ce que** le dispositif de mesure (9) est réalisé en tant qu'entraîneur qui est accouplé mécaniquement avec le dispositif de séparation.

7. dispositif selon l'une des revendications 1 à 3, **caractérisé en ce que** le dispositif de mesure (9) comporte une roue de mesure (10) accouplée avec les mandrins (2) pour déterminer la course de déplacement du mandrin (2).

8. Dispositif selon l'une des revendications précédentes, **caractérisé en ce que** la tête de coupe (4) comporte un outil de coupe fixe ou mobile.

9. Dispositif selon la revendication 8, **caractérisé en ce que** la tête de coupe (4) est réalisée pour découper par ultra-son, par laser ou par jet d'eau.

10. Procédé pour séparer des tubes flexibles (1) qui sont fabriqués en continu sur un alignement continu de mandrins (2) cylindriques accouplés les uns aux autres, dans lequel les mandrins (2) sont entraînés en avant dans une direction de transport (X) et des couches de caoutchouc et de support de renforcement sont appliquées sur les mandrins (2), une différence de matière par rapport à la matière des mandrins (2) existant dans les zones de liaison (7) des mandrins (2) successifs, **caractérisé par** :
- la détection des zones de liaison (7) des mandrins successifs (2),
- le positionnement d'une tête de coupe (4) d'un dispositif de séparation (1) pour tronçonner le tuyau flexible (1) de telle sorte que la tête de coupe (4) soit dirigée vers la zone de liaison détectée (7),
- entraînement vers l'avant du dispositif de séparation (3) dans la direction de transport (X) en synchrone avec la vitesse d'entraînement vers l'avant du mandrin (2).
- rotation de la tête de coupe (4) autour du pourtour de la zone de liaison des mandrins (7) pour découper le pourtour du tuyau flexible (1), pendant que le dispositif de séparation (3) est entraîné vers l'avant,
- recul du dispositif de séparation (3) vers une position de sortie après achèvement de l'opération de découpage.

11. Procédé selon la revendication 10, **caractérisé par** la libération de la liaison du mandrin qui porte le tuyau flexible (1) séparé, avec le mandrin (2) suivant dans la direction d'entraînement (X) et entraînement vers l'avant du mandrin (2) libéré avec une vitesse de déplacement plus élevée que la vitesse de déplacement des mandrins (2) pour individualiser le mandrin (2) libéré.

12. Procédé selon la revendication 10 ou 11, **caractérisé par** la mesure inductive des différences de matière dans les zones de liaison (7) des mandrins successifs pour la détection des zones de liaison (7).

13. Procédé selon la revendication 12, **caractérisé en ce que** la mesure des différences de matière est effectuée de façon inductive ou mécanique au moyen d'un entraîneur.

14. Procédé selon l'une des revendications 10 ou 11, **caractérisé en ce que** la détection des zones de liaison (7) est effectuée avec une roue de mesure (10) qui est accouplée avec les mandrins (2).

15. Procédé selon l'une des revendications 10 à 14, **caractérisé en ce que** la séparation des tuyaux flexibles (1) est effectuée avec un outil de découpe fixe ou mobile.

16. Procédé selon l'une des revendications 10 à 15, **caractérisé en ce que** la séparation des tuyaux flexibles (1) est effectuée par découpe ultra-son, découpe par laser ou découpe par jet d'eau.

17. Procédé selon l'une des revendications 10 à 15, **caractérisé en ce que** le couteau de découpe (4) est engagé dans une zone de découpe périphérique dans la zone de liaison (7) des mandrins successifs.
